# EUROPEAN PATENT APPLICATION

(11) **EP 4 571 655 A1**
(43) Date of publication of application: **18.06.2025**
(21) Application number: 23878692.5
(22) Date of filing: 28.06.2023
(51) Int. Cl.: G06T 15/00, G06T 1/20, G06T 13/20

(54) **BATCHING METHOD AND APPARATUS FOR DRAW INSTRUCTIONS**

(30) Priority: 21.10.2022 CN 202211295322
(71) Applicant: Huawei Technologies Co., Ltd., Shenzhen, Guangdong 518129 (CN)
(72) Inventor: ZHANG, Yunjin, Shenzhen, Guangdong 518129 (CN); CAO, Jie, Shenzhen, Guangdong 518129 (CN); LIU, Fengyi, Shenzhen, Guangdong 518129 (CN); LI, Juntao, Shenzhen, Guangdong 518129 (CN)
(74) Representative: Pfenning, Meinig & Partner mbB
(86) International application number: PCT/CN2023/103467
(87) International publication number: WO 2024/082695

(57) **Abstract**

This application discloses a rendering instruction merging method and apparatus, to merge rendering instructions at a driver layer without being perceived by an upper-layer application, so as to reduce draw calls, reduce overheads of a CPU, a GPU, and a memory, and shorten blocking time of the GPU. The method includes: obtaining, at the driver layer, a first rendering instruction generated by an application layer; merging the first rendering instruction and at least one second rendering instruction into a third rendering instruction at the driver layer, where the at least one second rendering instruction is one or more to-be-merged rendering instructions; and sending the third rendering instruction from the driver layer to a hardware layer for execution.

## Description

This application claims priority to Chinese Patent Application No. 202211295322.4, filed with the China National Intellectual Property Administration on October 21, 2022 and entitled "RENDERING INSTRUCTION MERGING METHOD AND APPARATUS", which is incorporated herein by reference in its entirety.

### TECHNICAL FIELD

This application relates to the field of computer technologies, and in particular, to a rendering instruction merging method and apparatus.

### BACKGROUND

Rendering is a process of converting a three-dimensional geometric model into a two-dimensional image. A process of rendering a scene is usually that a central processing unit (central processing unit, CPU) submits a three-dimensional geometric model and parameter data to a graphics processing unit (graphics processing unit, GPU), and the GPU processes the three-dimensional geometric model and the parameter data to generate a two-dimensional image. However, because a dynamic scene generally includes a large quantity of sequence frames, and the GPU needs to render each frame of the dynamic scene, it is quite time-consuming. As a user imposes an increasingly high requirement on visual effect, resolution and a pixel of each frame also need to be increasingly high, and the GPU needs to render each frame more delicately. Consequently, this further prolongs rendering time.

In addition, rendering a three-dimensional geometric model usually requires operations such as setting a related resource, setting a shader (shader), setting a rendering status, and submitting a rendering instruction, and an ordered set of these operations is referred to as a draw call (draw call, DC). After submitting a draw call to the GPU, the CPU usually starts to submit a next draw call, and continuously repeats the operation until rendering completion or active exit. A quantity of draw calls is an important indicator that represents performance of a graphics application. When the quantity of draw calls is excessively large, the CPU spends a large amount of time in submitting the draw calls. Consequently, this increases overheads of the CPU and a memory. In addition, because a draw call processing speed of the GPU is greater than a draw call submission speed of the CPU, the GPU is frequently in a state of waiting for the CPU to submit a draw call. Consequently, this prolongs blocking time of the GPU, reduces the performance of the graphics application, and affects user experience.

### SUMMARY

Embodiments of this application provide a rendering instruction merging method and apparatus, to merge rendering instructions without being perceived by an upper-layer application, so as to reduce draw calls, reduce overheads of a CPU, a GPU, and a memory, shorten blocking time of the GPU, and improve performance of a graphics application.

To achieve the foregoing objectives, the following technical solutions are used in embodiments of this application.

According to a first aspect, a rendering instruction merging method is provided. The method includes: obtaining, at a driver layer, a first rendering instruction generated by an application layer; merging the first rendering instruction and at least one second rendering instruction into a third rendering instruction at the driver layer, where the at least one second rendering instruction is one or more to-be-merged rendering instructions; and sending the third rendering instruction from the driver layer to a hardware layer for execution.

According to the rendering instruction merging method provided in this application, because a function of each layer in a layered architecture is based on functions of the same layer and a lower layer, the driver layer is a lower layer of the application layer, and the lower layer cannot call an upper layer. Rendering instructions generated by the application layer are merged at the driver layer, and an upper-layer application does not perceive a rendering instruction merging behavior at the driver layer. This reduces a draw call without being perceived by the upper-layer application. In addition, because the draw call is reduced, a CPU does not need to submit draw calls to a GPU a plurality of times. This reduces overheads of the CPU and a memory. Therefore, during real-time rendering by the GPU, frequent rendering status (rendering context) switching caused by switching between the draw calls is reduced. This reduces overheads of the GPU. In addition, swap-in and swap-out operations of rendering resources for different draw calls on the memory are reduced. This reduces the overheads of the memory.

In a possible implementation, the first rendering instruction and the at least one second rendering instruction meet a merging condition. The merging condition includes that a reference setting in a rendering setting of the first rendering instruction is different from a reference setting in a rendering setting of the at least one second rendering instruction, and the rendering settings except the reference settings are the same for the the first rendering instruction and the at least one second rendering instruction. The reference setting includes one or more of a uniform buffer, a shader parameter, a vertex buffer, an index buffer, a quantity of to-be-rendered geometric primitives, an index location of the to-be-rendered geometric primitive, or a texture map.

In the possible implementation, a rendering device can merge rendering instructions that meet the merging condition. This reduces the draw call. Therefore, during real-time rendering by the graphics processing unit, frequent rendering status (rendering context) switching caused by switching between the draw calls is reduced. This reduces the overheads of the GPU. In addition, swap-in and swap-out operations of rendering resources for different draw calls on the memory are reduced. This reduces the overheads of the memory.

In a possible implementation, the reference setting is the uniform buffer, or the reference setting is the shader parameter, or the reference setting is the vertex buffer and/or the index buffer. The merging the first rendering instruction and at least one second rendering instruction into a third rendering instruction includes: combining the reference setting of the first rendering instruction and the reference setting of the at least one second rendering instruction into an overall reference setting, and merging the first rendering instruction and the at least one second rendering instruction into an instancing rendering instruction as the third rendering instruction.

In a possible implementation, the reference setting is the vertex buffer and/or the index buffer. The merging the first rendering instruction and at least one second rendering instruction into a third rendering instruction includes: separately modifying the reference setting of the first rendering instruction and the reference setting of the at least one second rendering instruction to a bindless reference setting, and merging the first rendering instruction and the at least one second rendering instruction into a multi-draw indirect instruction as the third rendering instruction.

In a possible implementation, the reference setting is the quantity of to-be-rendered geometric primitives and the index location of the to-be-rendered geometric primitive. The merging the first rendering instruction and at least one second rendering instruction into a third rendering instruction includes: merging the first rendering instruction and the at least one second rendering instruction into a multi-draw indirect instruction as the third rendering instruction.

In a possible implementation, the reference setting is the texture map. The merging the first rendering instruction and at least one second rendering instruction into a third rendering instruction includes: combining the reference setting of the first rendering instruction and the reference setting of the at least one second rendering instruction into an overall reference setting, and merging the first rendering instruction and the at least one second rendering instruction into a multi-draw indirect instruction as the third rendering instruction; or separately modifying the reference setting of the first rendering instruction and the reference setting of the at least one second rendering instruction to a bindless reference setting, and merging the first rendering instruction and the at least one second rendering instruction into a multi-draw indirect instruction as the third rendering instruction.

In a possible implementation, the merging the first rendering instruction and at least one second rendering instruction into a third rendering instruction at the driver layer includes: when a quantity of the at least one second rendering instruction reaches a threshold, merging the first rendering instruction and the at least one second rendering instruction into the third rendering instruction at the driver layer.

According to a second aspect, this application provides a rendering instruction merging apparatus. The apparatus includes an obtaining module, a processing module, and a sending module.

The obtaining module is configured to obtain, at a driver layer, a first rendering instruction generated by an application layer.

The processing module is configured to merge the first rendering instruction and at least one second rendering instruction into a third rendering instruction at the driver layer. The at least one second rendering instruction is one or more to-be-merged rendering instructions.

The sending module is configured to send the third rendering instruction from the driver layer to a hardware layer for execution.

According to the rendering instruction merging apparatus provided in this application, because a function of each layer in a layered architecture is based on functions of the same layer and a lower layer, the driver layer is a lower layer of the application layer, and the lower layer cannot call an upper layer. Rendering instructions generated by the application layer are merged at the driver layer, and an upper-layer application does not perceive a rendering instruction merging behavior at the driver layer. This reduces a draw call without being perceived by the upper-layer application. In addition, because the draw call is reduced, a CPU does not need to submit draw calls to a GPU a plurality of times. This reduces overheads of the CPU and a memory. Therefore, during real-time rendering by the GPU, frequent rendering status (rendering context) switching caused by switching between the draw calls is reduced. This reduces overheads of the GPU. In addition, swap-in and swap-out operations of rendering resources for different draw calls on the memory are reduced. This reduces the overheads of the memory.

In a possible implementation, the first rendering instruction and the at least one second rendering instruction meet a merging condition. The merging condition includes that a reference setting in a rendering setting of the first rendering instruction is different from a reference setting in a rendering setting of the at least one second rendering instruction, and the rendering settings except the reference settings are the same for the the first rendering instruction and the at least one second rendering instruction. The reference setting includes one or more of a uniform buffer, a shader parameter, a vertex buffer, an index buffer, a quantity of to-be-rendered geometric primitives, an index location of the to-be-rendered geometric primitive, or a texture map.

In the possible implementation, a rendering device can merge rendering instructions that meet the merging condition. This reduces the draw call. Therefore, during real-time rendering by the graphics processing unit, frequent rendering status (rendering context) switching caused by switching between the draw calls is reduced. This reduces the overheads of the GPU. In addition, swap-in and swap-out operations of rendering resources for different draw calls on the memory are reduced. This reduces the overheads of the memory.

In a possible implementation, the reference setting is the uniform buffer, or the reference setting is the shader parameter, or the reference setting is the vertex buffer and/or the index buffer. The processing module is specifically configured to: combine the reference setting of the first rendering instruction and the reference setting of the at least one second rendering instruction into an overall reference setting, and merge the first rendering instruction and the at least one second rendering instruction into an instancing rendering instruction as the third rendering instruction.

In a possible implementation, the reference setting is the vertex buffer and/or the index buffer. The processing module is specifically configured to: separately modify the reference setting of the first rendering instruction and the reference setting of the at least one second rendering instruction to a bindless reference setting, and merge the first rendering instruction and the at least one second rendering instruction into a multi-draw indirect instruction as the third rendering instruction.

In a possible implementation, the reference setting is the quantity of to-be-rendered geometric primitives and the index location of the to-be-rendered geometric primitive. The processing module is specifically configured to merge the first rendering instruction and the at least one second rendering instruction into a multi-draw indirect instruction as the third rendering instruction.

In a possible implementation, the reference setting is the texture map. The processing module is specifically configured to: combine the reference setting of the first rendering instruction and the reference setting of the at least one second rendering instruction into an overall reference setting, and merge the first rendering instruction and the at least one second rendering instruction into a multi-draw indirect instruction as the third rendering instruction. Alternatively, the processing module is specifically configured to: separately modify the reference setting of the first rendering instruction and the reference setting of the at least one second rendering instruction to a bindless reference setting, and merge the first rendering instruction and the at least one second rendering instruction into a multi-draw indirect instruction as the third rendering instruction.

In a possible implementation, the processing module is specifically configured to: when a quantity of the at least one second rendering instruction reaches a threshold, merge the first rendering instruction and the at least one second rendering instruction into the third rendering instruction at the driver layer.

According to a third aspect, a rendering device is provided. The rendering device has a function of implementing the rendering instruction merging method according to any one of the first aspect and the possible implementations. The function may be implemented by hardware, or may be implemented by hardware executing corresponding software. The hardware or the software includes one or more modules corresponding to the function.

According to a fourth aspect, a computer-readable storage medium is provided. The computer-readable storage medium stores instructions. When the instructions are run on a computer, the computer is enabled to perform the rendering instruction merging method according to any one of the first aspect and the possible implementations.

According to a fifth aspect, a computer program product including instructions is provided. When the computer program product runs on a computer, the computer is enabled to perform the rendering instruction merging method according to any one of the first aspect and the possible implementations.

For technical effect brought by any design manner in the third aspect to the fifth aspect, refer to the technical effect brought by different possible implementations in the first aspect. Details are not described herein again.

### BRIEF DESCRIPTION OF DRAWINGS

FIG. 1 is a diagram of a structure of a rendering device according to an embodiment of this application;
FIG. 2 is a diagram of a structure of a rendering system according to an embodiment of this application;
FIG. 3 is a schematic flowchart of a rendering instruction merging method according to an embodiment of this application;
FIG. 4 is a diagram of merging of a rendering instruction merging method according to an embodiment of this application;
FIG. 5 is another schematic flowchart of a rendering instruction merging method according to an embodiment of this application;
FIG. 6A and FIG. 6B are another schematic flowchart of a rendering instruction merging method according to an embodiment of this application; and
FIG. 7 is a diagram of a structure of a rendering instruction merging apparatus according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" indicates that associated objects are in an "or" relationship. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically the same functions and purposes. A person skilled in the art may understand that the terms such as "first" and "second" do not limit a quantity or an execution sequence, and the terms such as "first" and "second" do not indicate a definite difference. In addition, in embodiments of this application, a term like "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the term like "example" or "for example" is intended to present a related concept in a specific manner for ease of understanding.

In addition, a network architecture and a service scenario described in embodiments of this application are intended to describe the technical solutions in embodiments of this application more clearly, and constitute no limitation on the technical solutions provided in embodiments of this application. A person of ordinary skill in the art may learn that, with evolution of the network architecture and emergence of a new service scenario, the technical solutions provided in embodiments of this application are also applicable to similar technical problems.

Draw call: Rendering a three-dimensional geometric model usually requires operations such as setting a related resource, setting a shader, setting a rendering status, and submitting a rendering instruction, and an ordered set of these operations is referred to as a draw call.

Multi-draw indirect (multi-draw indirect, MDI): Indirect rendering means that some rendering settings (for example, a quantity and index locations of geometric primitives) are stored in a buffer, and when an indirect rendering instruction needs to be executed, a parameter setting in the buffer is directly read. If rendering settings of a plurality of rendering instructions are stored in the buffer, after the buffer is read by one multi-draw indirect instruction, a plurality of different three-dimensional geometric models can be rendered at a time.

Bindless (bindless) reference setting: Bindless texture (bindless texture) is used as an example. The bindless reference setting means that a texture map used by a shader does not need to be bound in advance, and can be used after being obtained through indexing with a unique number. In this way, if a plurality of maps need to be used, each map does not need to be explicitly bound before use, and only an index of the map needs to be directly called.

Instancing (instancing) rendering: A rendering instruction may be used to render a plurality of three-dimensional geometric models that have a same geometric resource, rendering resource, shader parameter, and rendering status but different coordinate locations.

Currently, in a process in which a CPU and a GPU carried by a hardware layer perform rendering, each time the CPU submits a draw call to the GPU, the CPU needs to send a large quantity of rendering instructions to the GPU. The rendering instructions include a rendering resource, a shader parameter, a rendering status, and the like. After the CPU completes the process, the GPU starts to perform current rendering. A rendering speed of the GPU is much greater than a draw call submission speed of the CPU. Therefore, when a quantity of draw calls is excessively large, the CPU spends a large amount of time in submitting the draw calls. Consequently, this increases overheads of the CPU and a memory. In addition, the GPU is frequently in a state of waiting for the CPU to submit a draw call. Consequently, this prolongs blocking time of the GPU, and reduces performance of a graphics application.

A uniform buffer may be used to store a large quantity of matrices, vector data, and the like that are of a plurality of shaders and that need to be transferred, is generally in a regular array form, and is closely arranged in a memory.

A shader parameter is a parameter customized by a user when a shader is used for rendering, and is generally in an irregular array form.

A vertex buffer is a memory buffer that may be used to store vertex data.

An index buffer is a memory buffer that may be used to store index data, where the index data is an integer offset of a vertex buffer.

An index location of a to-be-rendered geometric primitive is used to point to an integer offset of an index buffer for the to-be-rendered geometric primitive.

Texture mapping is a technology for changing an appearance of a surface of an object by using an image, a function, or another data source.

Based on this, this application provides a rendering instruction merging method and apparatus, to read rendering instructions delivered to a driver layer, then merge the rendering instructions, and send a merged rendering instruction to a hardware layer for execution. Because a function of each layer in a layered architecture is based on functions of the same layer and a lower layer, the driver layer is a lower layer of an application layer, and the lower layer cannot call an upper layer. Rendering instructions generated by the application layer are merged at the driver layer, and the rendering instructions can be merged without being perceived by an upper-layer application. This reduces a draw call, reduces overheads of a CPU, a GPU, and a memory, and shortens blocking time of the GPU.

The following describes implementations of embodiments of this application in detail with reference to the accompanying drawings.

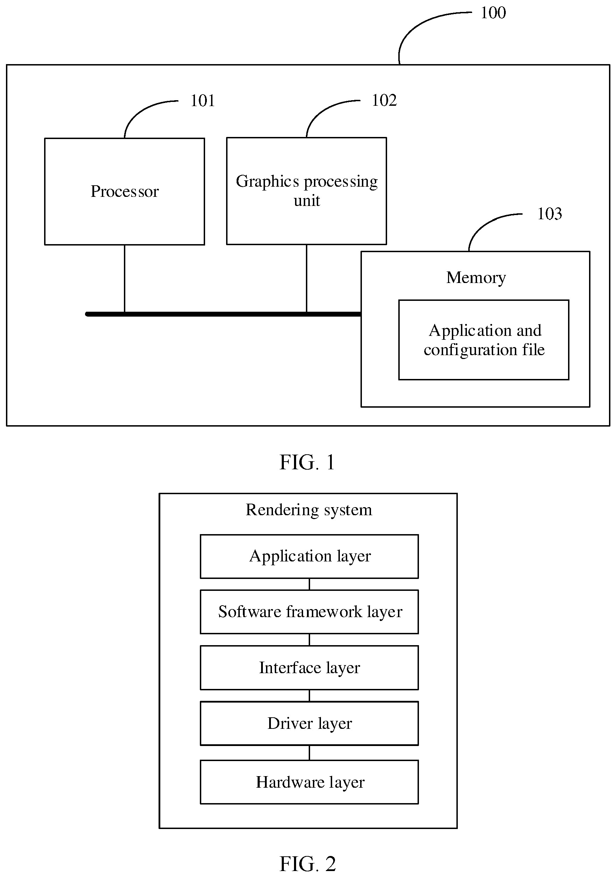

The solutions provided in this application may be applied to an architecture of a rendering device 100 shown in FIG. 1. The rendering device 100 may be a computer, a mobile phone, or another product form. This is not specifically limited. As shown in FIG. 1, the rendering device 100 includes a processor 101, a graphics processing unit 102, and a memory 103.

The processor 101 may be a CPU. The processor 101 may alternatively be a chip like another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component, or a combination of the foregoing chips.

The processor 101 is configured to: generate a rendering instruction based on a rendering request, merge rendering instructions at a driver layer by using the rendering instruction merging method in embodiments of this application, then convert a merged rendering instruction into hardware code, and send the hardware code to the graphics processing unit 102 for execution.

The graphics processing unit 102 is configured to obtain a two-dimensional image of a three-dimensional geometric model through rendering by executing the hardware code corresponding to the rendering instruction.

The memory 103 may be a volatile memory (volatile memory), for example, a random-access memory (random-access memory, RAM); or a non-volatile memory (non-volatile memory), for example, a read-only memory (read-only memory, ROM), a flash memory (flash memory), a hard disk drive (hard disk drive, HDD), or a solid-state disk (solid-state drive, SSD); or a combination of the foregoing memories, and is configured to store a rendering instruction, a rendering resource, a shader parameter, a rendering status, an application, a configuration file, data information, or other content that can be used to implement the method in this application.

The solutions provided in this application may be applied to a rendering system shown in FIG. 2. The rendering system may be deployed in the rendering device shown in FIG. 1. The rendering system shown in FIG. 2 includes an application layer, a software framework layer, an interface layer, a driver layer, and a hardware layer.

Specifically, the application layer, the software framework layer, the interface layer, and the driver layer may run on the processor 101 of the rendering device 100, and the hardware layer may run on the graphics processing unit 102 of the rendering device 100.

The application layer mainly carries a graphics rendering program. The graphics rendering program includes a game, a graphics application (application, APP), a display user interface (user interface, UI), a camera (camera), a virtual reality/augmented reality (virtual reality/augmented reality, VR/AR) technology, and the like. The graphics rendering program at the application layer may be run on a CPU, receive a rendering request sent by a user, and preliminarily generate a rendering instruction based on the rendering request.

The software framework layer mainly carries a rendering engine. The rendering engine includes a game engine (Unity), an unreal engine (Unreal Engine), a graphics display system (Android HWUI), a game development engine (Cocos), and the like. The software framework layer may run on the CPU, receive the rendering instruction preliminarily generated by the application layer, and further improve the rendering instruction.

The interface layer mainly carries an application programming interface. The application programming interface includes an open graphics library applicable to an embedded system (OpenGL for Embedded Systems, OpenGL ES), a new generation cross-platform three-dimensional drawing application programming interface (Vulkan), an open computing language (Open Computing Language, OpenCL), and the like. The interface layer may run on the CPU, receive a rendering instruction that is improved by the software architecture layer, call a rendering resource, a shader parameter, and a rendering status that match the rendering instruction, and then form a draw call by using the rendering resource, the shader parameter, the rendering status, and the improved rendering instruction.

The driver layer mainly carries a graphics driver. The driver layer may run on the CPU, merge rendering instructions in the draw call, convert a merged rendering instruction into hardware code, and send the hardware code to the hardware layer.

The hardware layer mainly carries graphics hardware. The hardware may be a GPU or the like. The hardware layer may run on a GPU, and obtain a two-dimensional image of a three-dimensional geometric model through rendering by executing the hardware code corresponding to the rendering instruction.

For example, when the user runs a game application on a mobile phone, a scene is rendered based on an operation of the user. The game application at the application layer running on the CPU responds to the operation of the user, generates a rendering request, and preliminarily generates a rendering instruction. Then, the game engine at the software framework layer running on the CPU improves the rendering instruction. Next, the interface layer running on the CPU obtains, by calling the application programming interface, a rendering resource, a shader parameter, and a rendering status that match the rendering instruction, and combines the rendering resource, the shader parameter, the rendering status, and the rendering instruction into a draw call. Then, the driver at the driver layer running on the CPU merges rendering instructions in the draw call, next, converts a merged rendering instruction into hardware code, and sends the hardware code to the hardware layer. The hardware layer may run the hardware code on the GPU, to obtain a two-dimensional image of the scene through rendering.

Specifically, for a process in which the driver layer in the rendering system merges the rendering instructions, refer to detailed descriptions of the following method content. Details are not described herein.

It should be noted that the rendering device shown in FIG. 1 and the rendering system shown in FIG. 2 are merely examples for describing an application scenario of the solutions in this application, and are not intended to limit the application scenario of the solutions in this application.

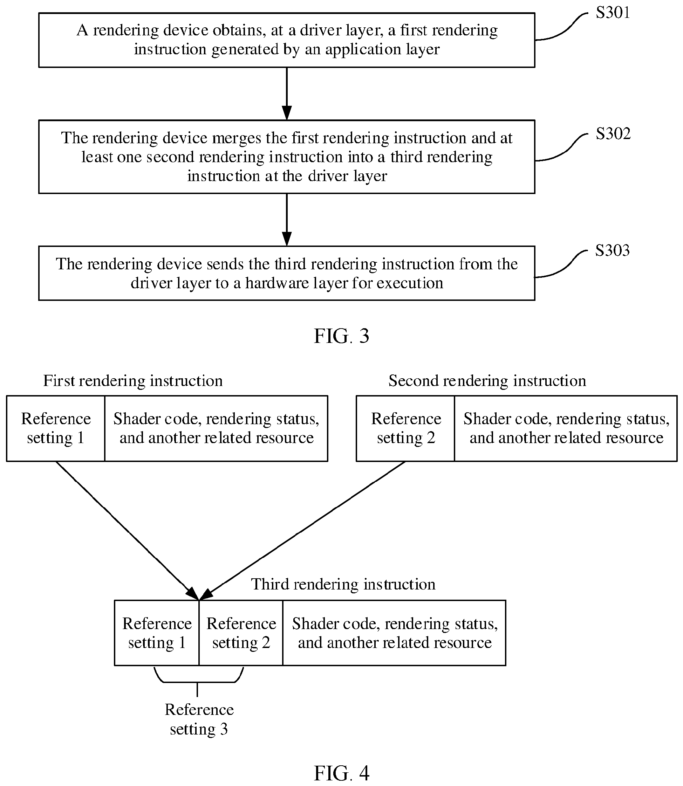

According to one aspect, this application discloses a rendering instruction merging method. The method may be performed by the rendering device 100 that is shown in FIG. 1 and in which the rendering system shown in FIG. 2 is deployed. As shown in FIG. 3, the method may include the following steps.

S301: A rendering device obtains, at a driver layer, a first rendering instruction generated by an application layer.

The first rendering instruction may be any rendering instruction that is generated by the application layer and that is obtained at the driver layer.

In a possible implementation, the first rendering instruction may be any rendering instruction that is obtained by converting a draw call read from the application layer and that is read at the driver layer.

For example, after a person skilled in writing a graphics rendering program inputs, at the application layer, a rendering request for rendering a three-dimensional geometric model, a software architecture layer improves the rendering request and sends an improved rendering request to an interface layer. The interface layer improves the improved rendering request to form a draw call and sends the draw call to the driver layer. The driver layer converts the draw call to obtain a rendering instruction.

In another possible implementation, the first rendering instruction may be any rendering instruction on which instancing rendering is performed and that is generated by the application layer.

For example, after a person skilled in writing a graphics rendering program inputs, at the application layer, a rendering request for rendering a three-dimensional geometric model, a software architecture layer improves the rendering request and sends an improved rendering request to an interface layer. The interface layer improves the improved rendering request to form a draw call. When the draw call meets a requirement of GPU instancing rendering, the interface layer performs GPU instancing rendering on a rendering instruction in the draw call. The interface layer sends a draw call obtained after instancing rendering to the driver layer. The driver layer converts the draw call to obtain a rendering instruction. During GPU instancing rendering, a rendering instruction may be used to render a plurality of three-dimensional geometric models that have a same geometry, resource, shader, and status but different coordinate locations, to preliminarily reduce draw calls.

S302: The rendering device merges the first rendering instruction and at least one second rendering instruction into a third rendering instruction at the driver layer.

The at least one second rendering instruction may be one or more to-be-merged rendering instructions.

In a possible implementation, each time a rendering instruction is read at the driver layer, if the to-be-merged rendering instruction does not exist, the read rendering instruction is recorded as a to-be-merged rendering instruction.

In another possible implementation, each time a rendering instruction is read at the driver layer, if the to-be-merged rendering instruction exists, and the read rendering instruction may be merged with the existing to-be-merged rendering instruction, but a sum of quantities of read rendering instructions and existing to-be-merged rendering instructions does not reach a threshold, the read rendering instruction is recorded as a to-be-merged rendering instruction.

In still another possible implementation, each time a rendering instruction is read at the driver layer, if the to-be-merged rendering instruction exists, and the read rendering instruction cannot be merged with the existing to-be-merged rendering instruction, the read rendering instruction is recorded as a to-be-merged rendering instruction, and the existing to-be-merged rendering instruction is sent to the driver layer for execution.

Specifically, after the first rendering instruction generated by the application layer is obtained at the driver layer in S301, if the first rendering instruction may be merged with the at least one second rendering instruction, the first rendering instruction and the at least one second rendering instruction are merged into the third rendering instruction. The third rendering instruction is one rendering instruction.

Further, a merging condition may be configured to determine whether rendering instructions are merged. Content of the merging condition is not specifically limited in embodiments of this application.

For example, the merging condition may include that a parameter setting in a rendering setting of the first rendering instruction is different from a parameter setting in a rendering setting of the at least one second rendering instruction, and the rendering settings except the parameter settings are the same for the the first rendering instruction and the at least one second rendering instruction. A reference setting may include one or more of a uniform buffer (uniform buffer), a shader parameter (uniforms), a vertex buffer (vertex buffer), an index buffer (index buffer), a quantity of to-be-rendered geometric primitives, an index location of the to-be-rendered geometric primitive, or a texture map.

Specifically, when content of the reference setting in the merging condition is different, processes of merging the first rendering instruction and the at least one second rendering instruction into the third rendering instruction are different, and may specifically include but are not limited to the following four specific implementations.

Implementation 1: The reference setting is the uniform buffer, or the reference setting is the shader parameter, or the reference setting is the vertex buffer and/or the index buffer. The first rendering instruction and the at least one second rendering instruction are merged into the third rendering instruction in S302. As shown in FIG. 4, the reference setting of the first rendering instruction is a reference setting 1, the reference setting of the second rendering instruction is a reference setting 2, and other rendering settings of the first rendering instruction and the second rendering instruction except the reference settings are the same for the the first rendering instruction and the at least one second rendering instruction. For example, the other same rendering setting except the reference setting may include a shader code, a rendering status, and another related resource. A specific implementation of a process of merging the first rendering instruction and the second rendering instruction into the third rendering instruction may be as follows: The reference setting 1 of the first rendering instruction and the reference setting 2 of the at least one second rendering instruction are combined into an overall reference setting 3, and the first rendering instruction and the at least one second rendering instruction are merged into an instancing rendering instruction as the third rendering instruction. The merged third rendering instruction is shown in FIG. 4. A reference setting of the third rendering instruction is a reference setting 3, and includes the reference setting 1 and the reference setting 2. Another rendering setting of the third rendering instruction except the reference setting is the same as those of the first rendering instruction and the second rendering instruction.

It should be noted that merging the reference setting of the first rendering instruction and the reference setting of the at least one second rendering instruction into an overall reference setting means to merge the reference setting of the first rendering instruction and reference settings of all second rendering instructions in the at least one second rendering instruction into the overall reference setting.

For example, the reference setting is the uniform buffer. When a uniform buffer 1 of a rendering instruction 1 is different from a uniform buffer 2 of a rendering instruction 2, and other shader codes, rendering statuses, other related resources, and the like are all consistent, a process of merging the rendering instruction 1 with the rendering instruction 2 may include: An address 1 of the uniform buffer 1 of the rendering instruction 1 may be added after an address 2 of the uniform buffer 2 of the rendering instruction 2. For example, the address 1 of the uniform buffer 1 of the rendering instruction 1 is 0 to 99, and the address 2 of the uniform buffer 2 of the rendering instruction 2 is 0 to 99. After data in the address 1 of the uniform buffer 1 of the rendering instruction 1 is added to the address 2 of the uniform buffer 2 of the rendering instruction 2, the address changes to 100 to 199, and an address of an overall uniform buffer 3 obtained through combination is 0 to 199. In addition, the rendering instruction 1 and the rendering instruction 2 are merged into an instancing rendering instruction as a rendering instruction 3.

It should be noted that, when the reference setting is the shader parameter, or the reference setting is the vertex buffer and/or the index buffer, a process of merging the first rendering instruction and the at least one second rendering instruction into the third rendering instruction is the same as that in the foregoing example. Details are not described herein again.

Implementation 2: The reference setting is the vertex buffer and/or the index buffer. The merging the first rendering instruction and at least one second rendering instruction into a third rendering instruction in S302 may be specifically implemented as follows: The reference setting of the first rendering instruction and a reference setting of each second rendering instruction are separately modified to a bindless reference setting, and the first rendering instruction and the at least one second rendering instruction are merged into a multi-draw indirect instruction as the third rendering instruction.

For example, when a vertex buffer 4 and an index buffer 4 of a rendering instruction 4 are different from a vertex buffer 5 and an index buffer 5 of a rendering instruction 5, and other shader codes, rendering statuses, other related resources, and the like are all consistent, a process of merging the rendering instruction 4 with the rendering instruction 5 may include: The rendering instruction 4 and the rendering instruction 5 are merged into a multi-draw indirect instruction as a rendering instruction 6, the vertex buffer 4 of the rendering instruction 4 and the vertex buffer 5 of the rendering instruction 5 point to the rendering instruction 6 in a form of indexes of memory addresses, and the index buffer 4 of the rendering instruction 4 and the index buffer 5 of the rendering instruction 5 point to the rendering instruction 6 in a form of indexes of memory addresses. In this way, when the rendering instruction 6 merged as a multi-draw indirect instruction needs to be executed, the vertex buffer 4 of the rendering instruction 4, the index buffer 4 of the rendering instruction 4, the vertex buffer 5 of the rendering instruction 5, and the index buffer 5 of the rendering instruction 5 can be directly read by using the index of the memory address.

Implementation 3: The reference setting is the quantity of to-be-rendered geometric primitives and the index location of the to-be-rendered geometric primitive. The merging the first rendering instruction and at least one second rendering instruction into a third rendering instruction in S302 may be specifically implemented as follows: The first rendering instruction and the at least one second rendering instruction are merged into a multi-draw indirect instruction as the third rendering instruction.

For example, when a quantity 7 of to-be-rendered geometric primitives of a rendering instruction 7 and an index location 7 of the to-be-rendered geometric primitive are different from a quantity 8 of to-be-rendered geometric primitives of a rendering instruction 8 and an index location 8 of the to-be-rendered geometric primitive, and other shader codes, related resources, other related statuses, and the like are all consistent, a process of merging the rendering instruction 7 with the rendering instruction 8 may include: The rendering instruction 7 and the rendering instruction 8 may be directly merged into a multi-draw indirect instruction as a rendering instruction 9.

Implementation 4: The reference setting is the texture map. The merging the first rendering instruction and at least one second rendering instruction into a third rendering instruction in S302 may be specifically implemented as follows: The reference setting of the first rendering instruction and the reference setting of the at least one second rendering instruction are combined into an overall reference setting, and the first rendering instruction and the at least one second rendering instruction are merged into a multi-draw indirect instruction as the third rendering instruction. Alternatively, the reference setting of the first rendering instruction and the reference setting of the at least one second rendering instruction are separately modified to a bindless reference setting, and the first rendering instruction and the at least one second rendering instruction are merged into a multi-draw indirect instruction as the third rendering instruction.

For example, a texture map array 10 of a rendering instruction 10 is different from a texture map array 11 of a rendering instruction 11. A process of merging the rendering instruction 10 with the rendering instruction 11 may include: The texture map array 10 and the texture map array 11 are combined into an entire texture map array 12, the rendering instruction 10 and the rendering instruction 11 are merged into a multi-draw indirect instruction 12, and the texture map array 12 is recorded in a buffer of the multi-draw indirect instruction 12.

Alternatively, for example, a texture map array 10 of a rendering instruction 10 is different from a texture map array 11 of a rendering instruction 11, and a process of merging the rendering instruction 10 with the rendering instruction 11 may include: the map array 10 and the mapping array 11 are modified to a bindless reference setting, and the rendering instruction 10 and the rendering instruction 11 are merged into a multi-draw indirect instruction 13.

In a possible implementation, when the first rendering instruction is obtained in S301, if the first rendering instruction and the recorded to-be-merged rendering instruction meet the merging condition, S302 is performed, to merge the first rendering instruction and the at least one second rendering instruction into the third rendering instruction.

In another possible implementation, when the first rendering instruction is obtained in S301, if the first rendering instruction and the recorded to-be-merged rendering instruction do not meet the merging condition, recorded to-be-merged rendering instructions are merged into the third rendering instruction.

In another possible implementation, because a memory size of the rendering device is fixed and a cache (cache) of the rendering device is fixed, S302 may be performed when a quantity of recorded to-be-merged rendering instructions reaches a threshold. In other words, when the first rendering instruction is obtained in S301, if the first rendering instruction and the recorded to-be-merged rendering instruction meet the merging condition, but a quantity of recorded second rendering instructions (to-be-merged rendering instructions) does not reach the threshold, the first rendering instruction is recorded as a to-be-merged rendering instruction, and S301 is performed again to read a next rendering instruction. When the first rendering instruction is obtained in S301, if the first rendering instruction and the recorded to-be-merged rendering instruction meet the merging condition, and a quantity of recorded second rendering instructions (to-be-merged rendering instructions) reaches the threshold, S302 is performed to merge the first rendering instruction and the at least one second rendering instruction as the third rendering instruction at the driver layer.

The threshold may be configured based on an actual requirement. This is not limited in embodiments of this application.

For example, the threshold may be determined based on a memory of the rendering device and an address of a rendering instruction. For example, the threshold may be 7.

For example, the memory of the rendering device is 800 bytes, and an address of a buffer of each rendering instruction is 100, and the rendering instruction occupies 100 bytes of the memory. It may be learned that the rendering device can store a maximum of eight rendering instructions. In this case, a threshold of the second rendering instruction is 7.

S303: The rendering device sends the third rendering instruction from the driver layer to a hardware layer for execution.

Specifically, the rendering device sends the third rendering instruction from the driver layer to the hardware layer, and a graphics processing unit at the hardware layer processes and executes the third rendering instruction, to complete a rendering request from the application layer.

In this application, the rendering instructions at the driver layer are merged. Because a function of each layer in a layered architecture is based on functions of the same layer and a lower layer, the driver layer is a lower layer of the application layer, and the lower layer cannot call an upper layer. Rendering instructions generated by the application layer are merged at the driver layer, and an upper-layer application does not perceive a rendering instruction merging behavior at the driver layer. This reduces the draw call without being perceived by the upper-layer application. During real-time rendering by the graphics processing unit, frequent rendering status (rendering context) switching caused by switching between draw calls is avoided. This reduces overheads of the GPU. In addition, swap-in and swap-out operations of rendering resources for different draw calls on the memory are reduced. This reduces overheads of the memory.

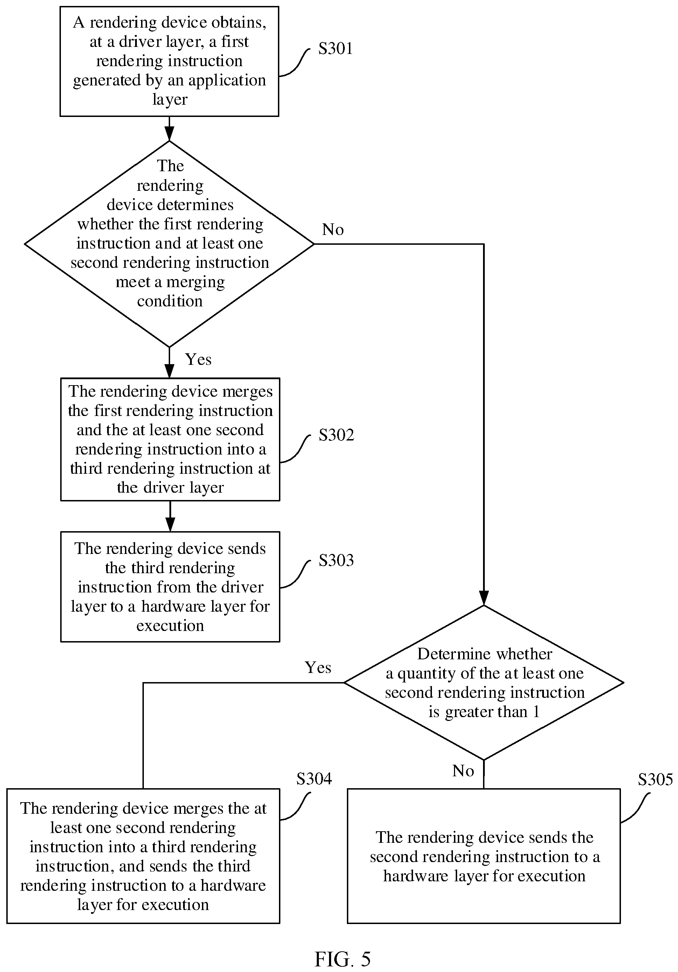

Further, in the foregoing process of S301 to S303, it describes a processing process in which, after a rendering instruction generated by the application layer is obtained at the driver layer, the obtained rendering instruction and the to-be-merged rendering instruction meet the merging condition. If it is determined, after a rendering instruction (for example, a fourth rendering instruction) generated by the application layer is obtained at the driver layer in S301, that the fourth rendering instruction and the recorded to-be-merged second rendering instruction do not meet the merging condition, as shown in FIG. 5, the method provided in embodiments of this application may further include S304 or S305.

Specifically, if the fourth rendering instruction and the at least one second rendering instruction do not meet the merging condition, and a quantity of the at least one second rendering instruction is greater than 1, S304 is performed. If the fourth rendering instruction and the at least one second rendering instruction do not meet the merging condition, and a quantity of the at least one second rendering instruction is 1, S305 is performed.

S304: The rendering device merges the at least one second rendering instruction into a third rendering instruction, and sends the third rendering instruction to a hardware layer for execution.

Specifically, in S304, the fourth rendering instruction is recorded as a to-be-merged rendering instruction, the at least one second rendering instruction is merged into the third rendering instruction, and the third rendering instruction is sent to the hardware layer, and a graphics processing unit at the hardware layer performs real-time rendering by using the merged third rendering instruction.

S305: The rendering device sends the second rendering instruction to a hardware layer for execution.

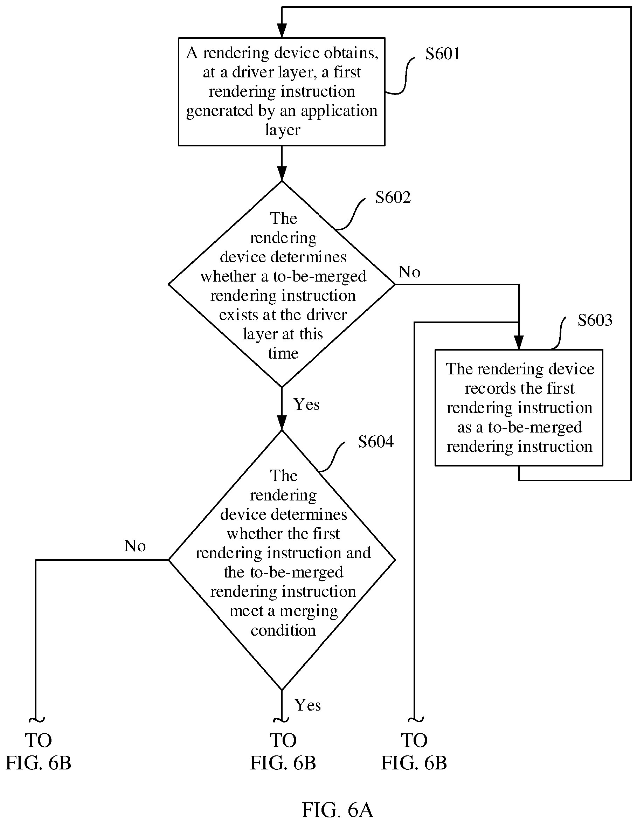

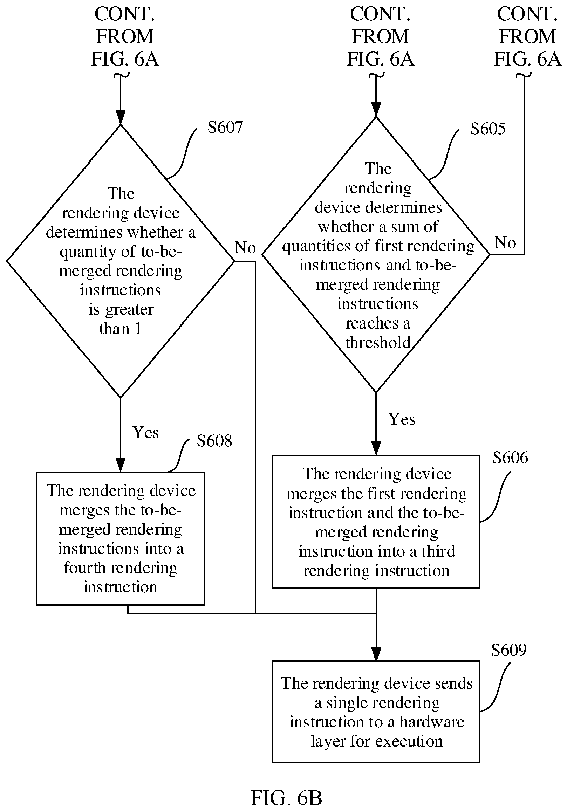

In the foregoing process of S301 to S305, it describes a processing process performed after the rendering instruction generated by the application layer is obtained at the driver layer. The following describes an entire procedure of the solutions in this application by using a specific example. As shown in FIG. 6A and FIG. 6B, a rendering instruction merging method provided in this application may include the following steps.

S601: A rendering device obtains, at a driver layer, a first rendering instruction generated by an application layer.

S602: The rendering device determines whether a to-be-merged rendering instruction exists at the driver layer at this time.

S603 is performed if the to-be-merged rendering instruction does not exist. S604 is performed if the to-be-merged rendering instruction exists.

S603: The rendering device records the first rendering instruction as a to-be-merged rendering instruction.

After S603, the rendering device continues to perform S601, to continue to obtain, at the driver layer, a next rendering instruction generated by the application layer.

S604: The rendering device determines whether the first rendering instruction and the to-be-merged rendering instruction meet a merging condition.

S605 is performed if the merging condition is met. S607 is performed if the merging condition is not met.

S605: The rendering device determines whether a sum of quantities of first rendering instructions and to-be-merged rendering instructions reaches a threshold.

S606 is performed if the threshold is reached. S603 is performed if the threshold is not reached.

S606: The rendering device merges the first rendering instruction and the to-be-merged rendering instruction into a third rendering instruction.

After S606, the rendering device performs S609 to send the third rendering instruction to a hardware layer for execution.

S607: The rendering device determines whether a quantity of to-be-merged rendering instructions is greater than 1.

S608 is performed if the quantity of to-be-merged rendering instructions is greater than 1. S609 is performed if the quantity of to-be-merged rendering instructions is not greater than 1.

S608: The rendering device merges the to-be-merged rendering instructions into a fourth rendering instruction.

After S608, the rendering device performs S609 to send the fourth rendering instruction to a hardware layer for execution.

S609: The rendering device sends a single rendering instruction to the hardware layer for execution.

From a perspective of a working principle of the device, the foregoing mainly describes the solutions provided in embodiments of this application. It may be understood that, to implement the foregoing functions, the rendering device includes a corresponding hardware structure and/or software module for performing each function. A person skilled in the art should be easily aware that, in combination with algorithms and steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the rendering device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division during actual implementation.

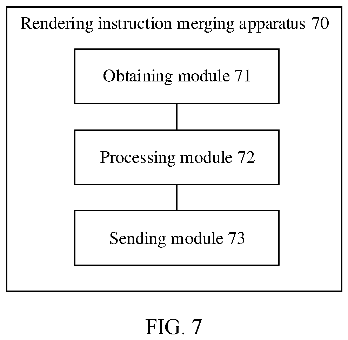

When each functional module is obtained through division based on each corresponding function, FIG. 7 is a diagram of possible composition of the rendering instruction merging apparatus in the foregoing embodiments. As shown in FIG. 7, the rendering instruction merging apparatus 70 may include an obtaining module 71, a processing module 72, and a sending module 73.

The obtaining module 71 is configured to support the rendering instruction merging apparatus 70 in performing S301 in the rendering instruction merging method shown in FIG. 3.

The processing module 72 is configured to support the rendering instruction merging apparatus 70 in performing S302 in the rendering instruction merging method shown in FIG. 3 or performing S304 and S305 in the rendering instruction merging method shown in FIG. 5.

The sending module 73 is configured to support the rendering instruction merging apparatus 70 in performing S303 in the rendering instruction merging method shown in FIG. 3 or FIG. 5.

It should be noted that all related content of the steps in the foregoing method embodiments may be cited in function descriptions of corresponding functional modules. Details are not described herein again.

The rendering instruction merging apparatus 70 provided in this embodiment of this application is used to perform the rendering instruction merging method shown in FIG. 3 or FIG. 5, and therefore can achieve same effect as the foregoing rendering instruction merging method.

An embodiment of this application further provides a rendering device. The rendering device may be the rendering device 100 shown in FIG. 1 and described in the foregoing embodiment. The rendering device 100 may perform the rendering instruction merging method and related steps in the foregoing method embodiments.

An embodiment of this application further provides a computer-readable storage medium. The computer-readable storage medium stores instructions. When the instructions are executed, the rendering instruction merging method and related steps in the foregoing method embodiment are performed.

An embodiment of this application further provides a computer program product. When the computer program product runs on a computer, the computer is enabled to perform the rendering instruction merging method and related steps in the foregoing method embodiment.

Based on the descriptions of the foregoing implementations, a person skilled in the art may clearly understand that, for ease and brevity of description, division into the foregoing functional modules is merely used as an example for description. During actual application, the foregoing functions may be allocated to different functional modules for implementation based on a requirement, that is, an inner structure of the apparatus is divided into different functional modules, to implement all or some of the functions described above.

In the several embodiments provided in this application, it should be understood that the disclosed apparatus and methods may be implemented in other manners. For example, the apparatus embodiment described above is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communicative connections may be implemented through some interfaces. The indirect couplings or communicative connections between the apparatuses or units may be implemented in electrical, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions in embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

The integrated unit may be stored in a readable storage medium when being implemented in the form of the software functional unit and sold or used as an independent product. Based on such an understanding, the technical solutions in embodiments of this application essentially, or the part making a contribution, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk drive, a read-only memory (read-only memory, ROM), a random-access memory (random-access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A rendering instruction merging method, comprising:
obtaining, at a driver layer, a first rendering instruction generated by an application layer;
merging the first rendering instruction and at least one second rendering instruction into a third rendering instruction at the driver layer, wherein the at least one second rendering instruction is one or more to-be-merged rendering instructions; and
sending the third rendering instruction from the driver layer to a hardware layer for execution.

2. The method according to claim 1, wherein the first rendering instruction and the at least one second rendering instruction meet a merging condition, and the merging condition comprises that a reference setting in a rendering setting of the first rendering instruction is different from a reference setting in a rendering setting of the at least one second rendering instruction, and the rendering settings except the reference settings are the same for the the first rendering instruction and the at least one second rendering instruction; and the reference setting comprises one or more of a uniform buffer, a shader parameter, a vertex buffer, an index buffer, a quantity of to-be-rendered geometric primitives, an index location of the to-be-rendered geometric primitive, or a texture map.

3. The method according to claim 1 or 2, wherein the reference setting is the uniform buffer, or the reference setting is the shader parameter, or the reference setting is the vertex buffer and/or the index buffer, and the merging the first rendering instruction and at least one second rendering instruction into a third rendering instruction comprises:
combining the reference setting of the first rendering instruction and the reference setting of the at least one second rendering instruction into an overall reference setting, and merging the first rendering instruction and the at least one second rendering instruction into an instancing rendering instruction as the third rendering instruction.

4. The method according to claim 1 or 2, wherein the reference setting is the vertex buffer and/or the index buffer, and the merging the first rendering instruction and at least one second rendering instruction into a third rendering instruction comprises:
separately modifying the reference setting of the first rendering instruction and the reference setting of the at least one second rendering instruction to a bindless reference setting, and merging the first rendering instruction and the at least one second rendering instruction into a multi-draw indirect instruction as the third rendering instruction.

5. The method according to claim 1 or 2, wherein the reference setting is the quantity of to-be-rendered geometric primitives and the index location of the to-be-rendered geometric primitive, and the merging the first rendering instruction and at least one second rendering instruction into a third rendering instruction comprises:
merging the first rendering instruction and the at least one second rendering instruction into a multi-draw indirect instruction as the third rendering instruction.

6. The method according to claim 1 or 2, wherein the reference setting is the texture map, and the merging the first rendering instruction and at least one second rendering instruction into a third rendering instruction comprises:
combining the reference setting of the first rendering instruction and the reference setting of the at least one second rendering instruction into an overall reference setting, and merging the first rendering instruction and the at least one second rendering instruction into a multi-draw indirect instruction as the third rendering instruction; or
separately modifying the reference setting of the first rendering instruction and the reference setting of the at least one second rendering instruction to a bindless reference setting, and merging the first rendering instruction and the at least one second rendering instruction into a multi-draw indirect instruction as the third rendering instruction.

7. The method according to any one of claims 1 to 6, wherein the merging the first rendering instruction and at least one second rendering instruction into a third rendering instruction at the driver layer comprises:
when a quantity of the at least one second rendering instruction reaches a threshold, merging the first rendering instruction and the at least one second rendering instruction into the third rendering instruction at the driver layer.

8. A rendering instruction merging apparatus, comprising:
an obtaining module, configured to obtain, at a driver layer, a first rendering instruction generated by an application layer;
a processing module, configured to merge the first rendering instruction and at least one second rendering instruction into a third rendering instruction at the driver layer, wherein the at least one second rendering instruction is one or more to-be-merged rendering instructions; and
a sending module, configured to send the third rendering instruction from the driver layer to a hardware layer for execution.

9. The apparatus according to claim 8, wherein the first rendering instruction and the at least one second rendering instruction meet a merging condition, and the merging condition comprises that a reference setting in a rendering setting of the first rendering instruction is different from a reference setting in a rendering setting of the at least one second rendering instruction, and the rendering settings except the reference settings are the same for the the first rendering instruction and the at least one second rendering instruction; and the reference setting comprises one or more of a uniform buffer, a shader parameter, a vertex buffer, an index buffer, a quantity of to-be-rendered geometric primitives, an index location of the to-be-rendered geometric primitive, or a texture map.

10. The apparatus according to claim 8 or 9, wherein the reference setting is the uniform buffer, or the reference setting is the shader parameter, or the reference setting is the vertex buffer and/or the index buffer, and the processing module is specifically configured to:
combine the reference setting of the first rendering instruction and the reference setting of the at least one second rendering instruction into an overall reference setting, and merge the first rendering instruction and the at least one second rendering instruction into an instancing rendering instruction as the third rendering instruction.

11. The apparatus according to claim 8 or 9, wherein the reference setting is the vertex buffer and/or the index buffer, and the processing module is specifically configured to:
separately modify the reference setting of the first rendering instruction and the reference setting of the at least one second rendering instruction to a bindless reference setting, and merge the first rendering instruction and the at least one second rendering instruction into a multi-draw indirect instruction as the third rendering instruction.

12. The apparatus according to claim 8 or 9, wherein the reference setting is the quantity of to-be-rendered geometric primitives and the index location of the to-be-rendered geometric primitive, and the processing module is specifically configured to:
merge the first rendering instruction and the at least one second rendering instruction into a multi-draw indirect instruction as the third rendering instruction.

13. The apparatus according to claim 8 or 9, wherein the reference setting is the texture map, and the processing module is specifically configured to:
combine the reference setting of the first rendering instruction and the reference setting of the at least one second rendering instruction into an overall reference setting, and merge the first rendering instruction and the at least one second rendering instruction into a multi-draw indirect instruction as the third rendering instruction; or
separately modify the reference setting of the first rendering instruction and the reference setting of the at least one second rendering instruction to a bindless reference setting, and merge the first rendering instruction and the at least one second rendering instruction into a multi-draw indirect instruction as the third rendering instruction.

14. The apparatus according to any one of claims 8 to 13, wherein
the processing module is specifically configured to: when a quantity of the at least one second rendering instruction reaches a threshold, merge the first rendering instruction and the at least one second rendering instruction into the third rendering instruction at the driver layer.

15. A rendering device, comprising: at least one processor; and a memory communicatively connected to the at least one processor, wherein the memory stores instructions that are capable of being executed by the at least one processor, and the instructions are executed by the at least one processor, to enable the at least one processor to perform the rendering instruction merging method according to any one of claims 1 to 7.

16. A computer-readable storage medium, wherein the computer-readable storage medium stores a computer program, and when the computer program is executed by a processor, the rendering instruction merging method according to any one of claims 1 to 7 is implemented.

17. A computer program product, wherein when the computer program product runs on a computer, the computer is enabled to perform the rendering instruction merging method according to any one of claims 1 to 7.
